(19) Europäisches Patentamt
European Patent Office
Office européen des brevets

(11) Publication number: **0 267 794 B1**

(12) **EUROPEAN PATENT SPECIFICATION**

(45) Date of publication of patent specification: **05.05.93**

(51) Int. Cl.5: **C08F 10/00**, C08F 4/62, C08F 4/02

(21) Application number: **87310004.4**

(22) Date of filing: **12.11.87**

(54) **Process for preparing polyolefins.**

(30) Priority: **12.11.86 JP 267742/86**

(43) Date of publication of application:
**18.05.88 Bulletin 88/20**

(45) Publication of the grant of the patent:
**05.05.93 Bulletin 93/18**

(84) Designated Contracting States:
**DE GB**

(56) References cited:
**EP-A- 0 043 220**
**EP-A- 0 080 052**

**PATENT ABSTRACTS OF JAPAN vol. 7, no. 91 (C-162)(1236) 15 April 1983**

(73) Proprietor: **Nippon Petrochemicals Co., Ltd.**
**Miyuki Building, 3-1 Uchisaiwai-cho**
**1-chome Chiyoda-ku**
**Tokyo(JP)**

(72) Inventor: **Sugita, Shoji**
**3-35-2 Ohkubo Konan-ku**
**Yokohama-shi Kanagawa-ken(JP)**
Inventor: **Iwasaki, Yoshiharu**
**4-4-7 Tamagawa**
**Setagaya-ku Tokyo(JP)**
Inventor: **Miyazaki, Yasunosuke**
**4-20-11 Tsurukawa**
**Machida-shi Tokyo(JP)**
Inventor: **Miyoshi, Mituji**
**3-31-4 Fukazawa**
**Setagaya-ku Tokyo(JP)**
Inventor: **Tajima, Yoshio**
**2-39-17 Kamiikedai**
**Ohta-ku Tokyo(JP)**

(74) Representative: **Cropp, John Anthony David et al**
**MATHYS & SOUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

### BACKGROUND OF THE INVENTION

The present invention relates to a process for homopolymerizing or copolymerizing α-olefins in high activity, with high stereospecificity and in good condition of polymer properties, especially fluidity and particle shape, using a novel catalyst.

Catalysts comprising titanium halides and organo-aluminum compounds have heretofore been known as high stereospecific polymerization catalysts for α-olefins. However, although polymerizations using such known catalysts afford highly stereospecific polymers, the catalytic activity per unit titanium is still insufficient and it is necessary to remove the catalyst remaining in the polymer produced.

Recently, various proposals have been made for improving the catalytic activity. According to those proposals, a high catalytic activity is attained when using a catalyst component comprising an inorganic solid carrier, e.g. $MgCl_2$, and $TiCl_4$ supported thereon. However, the magnesium halide as the carrier is activated mainly by pulverization, e.g. milling, before use. Consequently, the resulting supported catalyst is irregular in shape, has a wide particle size distribution and contains a larger proportion of fine powder. As a result, the shape of the olefin polymer prepared using such catalyst is also generally irregular and the proportion of fine powder thereof is large. Such a polymer containing a large proportion of fine powder is low in bulk density and it is industrially difficult to recover and handle the polymer.

Thus, according to such conventional proposals, the resulting polymers are relatively small in average particle diameter and are generally wide in particle size distribution so large in the proportion of a fine particulate portion. For this reason, improvement has keenly been desired from the standpoint of both productivity and slurry handling. Besides, when these powdery polymers are subjected to forming, there arise problems such as dusting and lowering of the forming efficiency. For this reason, there has been a keen desire for the foregoing increase of bulk density and reduction of the fine particulate proportion. Further, a still further improvement is considered necessary in order to satisfy the recent keen desire for omitting the pelletizing step and using a powdery polymer directly in a processing machine and to this end granulating the powdery polymer for example.

Moreover, in the preparation of polyolefins it is preferable that the catalytic activity be as high as possible. From this standpoint, a catalyst of even higher activity has been desired. It is also important that the proportion of atactic portion in the resulting polymer be as small as possible.

U.S. Patent No.4,619,981 discloses a process for preparing a polyolefin having a high bulk density. However, the polyolefin thus obtained is relatively small in average particle size and generally wide in particle size distribution, and, for this reason, improvement has still been desired from the standpoint of slurry handling and the like.

### SUMMARY OF THE INVENTION

It is the object of the present invention to overcome the above-mentioned problems of the prior art.

More particularly, the object of the present invention is to provide a process for homopolymerizing or copolymerizing α-olefins in high activity, with high stereospecificity and in good condition of polymer properties, especially fluidity and particle shape, using a novel catalyst.

The present invention resides in a process for preparing polyolefins by homopolymerizing or copolymerizing olefins using a catalyst comprising a solid catalyst component and an organometallic compound, the solid catalyst component being obtained by contacting at least a titanium compound and/or a vanadium compound with a solid material (a), the solid material (a) being obtained by contacting the reaction product of components (1) and (2) with component (3): (1) a silicon oxide and/or an aluminium oxide, (2) a magnesium halide and (3) an organometallic compound.

### DETAILED DESCRIPTION OF THE INVENTION

The present invention will be described in detail hereinunder.

#### Preparation of Solid Catalyst Component

In the present invention, the method of obtaining the solid material (a) by contacting the reaction product of (1) a silicon oxide and/or an aluminium oxide, and (2) a magnesium halide with (3) an organometallic compound is not specially limited. There may be adopted a method of contacting and

thereby reacting the above three components (1) to (3) at a temperature of −100°C to 400°C, preferably −80°C to 300°C, for usually 5 minutes to 50 hours, in the presence or absence of an inert solvent.

Inert solvents which may be used in the reaction are not specially limited. Usually, hydrocarbons and/or derivatives thereof which do not inactivate Ziegler type catalysts are employable, examples of which include various saturated aliphatic hydrocarbons, aromatic hydrocarbons and alicyclic hydrocarbons such as propane, butane, pentane, hexane, heptane, octane, benzene, toluene, xylene and cyclohexane, as well as alcohols, ethers and esters such as ethanol, diethyl ether, tetrahydrofuran, ethyl acetate and ethyl benzoate.

The most preferred method of contact of the components (1), (2) and (3) in the present invention is as follows.

First, using an inert solvent which dissolves the component (2), the reaction of components (1) and (2) is conducted in the said solvent at a temperature of −100°C to 400°C, preferably −80°C to 300°C, for 5 minutes to 50 hours, preferably 10 minutes to 10 hours. Preferred examples of such solvent are alcohols, tetrahydrofuran and ethyl acetate.

The contact ratio of components (1) and (2) is 0.01 to 5 g, preferably 0.1 to 2 g, of component (2) per gram of component (1). The solvent is removed after the reaction to obtain the reaction product of components (1) and (2).

Then, component (3) is contacted with the above reaction product of components (1) and (2) at a temperature of 20°C to 400°C, preferably 50°C to 300°C, for usually 5 minutes to 20 hours, directly or in the presence of an inert solvent such as hexane, heptane, octane, benzene, toluene, or xylene.

The ratio of contact of component (3) with the reaction product of components (1) and (2) is 0.001 to 10 mols, preferably 0.01 to 1 mol, of component (3) per gram of the reaction product of components (1) and (2).

As the method of obtaining the solid catalyst component by contacting the thus-prepared solid material (a) with at least a titanium compound and/or a vanadium compound, there may be adopted. for example, a method in which an electron donor is contacted with the solid material (a) to obtain a solid material (b) and then a titanium compound is reacted with the solid material (b) to obtain the solid catalyst component.

The method of obtaining the solid material (b) is not specially limited. There may be adopted a method in which the solid material (a) is contacted with an electron donor under heating at a temperature of 20° to 400°C, preferably 50° to 300°C, for usually 5 minutes to 20 hours, in the presence or absence of the foregoing inert solvent.

The contact ratio of the solid material (a) and the electron donor is 0.01 to 1000 mmols, preferably 0.1 to 100 mmols, of the electron donor (each of electron donors if used plurally) per gram of the solid material (a).

The method of obtaining the solid catalyst component by reacting the solid material (b) with a titanium compound is not specially limited. Both may be contacted under heating at a temperature of 20° to 400°C, preferably 50° to 300°C, for usually 5 minutes to 20 hours, in the presence or absence of the foregoing inert solvent.

No special limitation is placed on the amount of the titanium compound used. But, preferably there is made adjustment so that the amount of the titanium compound contained in the solid catalyst component is in the range of 0.1 to 20 wt.%, preferably 1 to 10 wt.%.

The silicon oxide used as component (1) in the present invention is silica or a double oxide of silicon and at least one other metal selected from GroupsI−VIII of the Periodic Table.

The aluminum oxide used as component (1) in the present invention is alumina or a double oxide of aluminum and at least one other metal selected from Groups I−VIII in the Periodic Table.

As typical examples of the double oxide of silicon or aluminum and at least one other metal selected from Groups I−VIII in the Periodic Table there are mentioned various natural and synthetic double oxides such as $Al_2O_3 \cdot MgO$, $Al_2O_3 \cdot CaO$, $Al_2O_3 \cdot SiO_2$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$, and $SiO_2 \cdot MgO$. It is to be noted that these formulae are not molecular formulae but represent only compositions and that the structure and component ratio of the double oxide used in the present invention are not specially limited thereby. It goes without saying that the silicon oxide and/or aluminum oxide used in the present invention may have a small amount of water adsorbed therein or may contain a small amount of impurities.

Properties of the silicon oxide and/ or aluminum oxide used in the present invention are very important because they have great influence on the properties of polymer particles, particularly on the formation of a fluidic fine powder.

They have an average particle diameter of 1 to 1000 μm, preferably 20 to 200 μm, a specific surface area of 50 to 1000 $m^2/g$, preferably 100 to 500 $m^2/g$, and a pore volume of 0.2 to 3 ml/g, preferably 0.5 to

2.5 ml/g. Spherical amorphous particles are particularly preferred.

The magnesium halide used as components (2) is substantially anhydrous Examples include magnesium fluoride, magnesium chloride, magnesium bromide and magnesium iodide, with magnesium chloride being particularly preferred.

The organometallic compound used as component (3) in the present invention may be selected from organometallic compounds of Group I–IV metals in the Periodic Table. Above all, organoaluminum compounds and organozinc compounds are preferred. As examples thereof there may be mentioned organoaluminum compounds of the general formulae $R_3Al$, $R_2AlX$, $RAlX_2$, $R_2AlOR$, $RAl(OR)X$ and $R_3Al_2X_3$ wherein the Rs, which may be alike or different, are each an alkyl or aryl group having 1 to 20 carbon atoms and X is a halogen atom, and organozinc compounds of the general formula $R_2Z_n$ wherein the Rs, which may be alike or different, are each an alkyl group having 1 to 20 carbon atoms. More concrete examples include triethylaluminum, triisopropylaluminum, triisobutylaluminum, tri-sec-butylaluminum, tri-tert-butylaluminum, trihexylaluminum, trioctylaluminum, tridodecylaluminum, diethylaluminum chloride, diisopropylaluminum chloride, diethylaluminum monoethoxide, ethylaluminum sesquichloride, ethylaluminum dichloride, diethylzinc, and mixtures thereof.

The organometallic compound used in obtaining the solid material (a) and that used in the polymerization may be the same or different.

As examples of the titanium compound and/or vanadium compound used in the present invention there may be mentioned halides, alkoxyhalides, alkoxides and halogenated oxides of titanium and/or vanadium. Preferred examples of the titanium compound in the present invention are tetravalent and trivalent titanium compounds. As tetravalent titanium compounds, those of the general formula $Ti(OR)_nX_{4-n}$ are preferred wherein R is an alkyl, aryl or aralkyl group having 1 to 20 carbon atoms, X is a halogen atom and n is $0 \leqq n \leqq 4$. Examples are titanium tetrachloride, titanium tetrabromide, titanium tetraiodide, monomethoxytrichlorotitanium, dimethoxydichlorotitanium, trimethoxymonochlorotitanium, tetramethoxytitanium, monoethoxytrichlorotitanium, diethoxydichlorotitanium, triethoxymonochlorotitanium, tetraethoxytitanium, monoisopropoxytrichlorotitanium, diisopropoxydichlorotitanium, tetraisopropoxytitanium, monobutoxytrichlorotitanium, dibutoxydichlorotitanium, monopentoxytrichlorotitanium, monophenoxytrichlorotitanium, diphenoxydichlorotitanium, triphenoxymonochlorotitanium and tetraphenoxytitanium. As trivalent titanium compounds there may be used, for example, titanium trihalides obtained by reducing titanium tetrahalides such as titanium tetrachloride and titanium tetrabromide with hydrogen, aluminum, titanium or an organometallic compound of a metal selected from Groups I through III in the Periodic Table as well as trivalent titanium compounds obtained by reducing tetravalent alkoxytitanium halides of the general formula $Ti(OR)_mX_{4-m}$ wherein R is an alkyl, aryl or aralkyl group having 1 to 20 carbon atoms, X is a halogen atom and m is $0 < m < 4$, with an organometallic compound of a metal selected from Groups I through III in the Periodic Table.

As examples of the vanadium compound are mentioned tetravalent vanadium compounds such as vanadium tetrachloride, vanadium tetrabromide, vanadium tetraiodide, and tetraethoxyvanadium; pentavalent vanadium compounds such as vanadium oxytrichloride, ethoxydichlorovanadyl, triethoxyvanadyl, and tributoxyvanadyl; and trivalent vanadium compounds such as vanadium trichloride and vanadium triethoxide.

The titanium compound and the vanadium compound are often used together in order to make the present invention more effective. In this case, it is preferable that the V/Ti mol ratio be in the range of 2/1 to 0.01/1.

As the electron donor to be contacted with the solid material (a) used in the invention, there may be used any of known electron donors which are used for Ziegler type catalysts of high activity in the preparation of polyolefins. For example, mention may be made of, as inorganic esters, (1) silicon compounds, (2) phosphoric acid estersand (3) boric acid esters as organic esters, (4) organic acid esters, (5) heterocyclic carboxylic acid esters and (6) diesters (particularly aromatic carboxylic acid esters); as well as (7) phenols, (8) ketones, (9) ethers, (10) acid anhydrides and (11) hindered amines (piperidines).
These compounds may be used each alone or in combinations of two or more.

Hereinafter, the electron donors used in the present invention are mentioned.

(1) Silicon compounds:

Preferred silicon compounds used as electron donors in the present invention are represented by the general formula

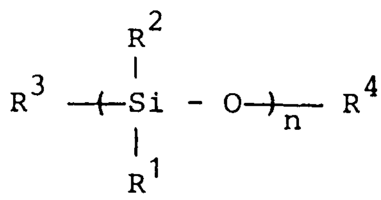

wherein $R^1$, $R^2$ and $R^3$ are each a hydrocarbon radical having 1 to 24, preferably 1 to 18, carbon atoms, an alkoxy group, hydrogen, or a halogen atom, $R^4$ is a hydrocarbon radical having 1 to 24, preferably 1 to 18, carbon atoms, and n is $1 \leqq n \leqq 30$. Examples include monomethyltrimethoxysilane, monoethyltrimethoxysilane, monomethyltriethoxysilane, monomethyltri-n-butoxysilane, monomethyltri-sec-butoxysilane, monomethyltriisopropoxysilane, monomethyltripentoxysilane, monomethyltrioctoxysilane, monomethyltristearoxysilane, monomethyltriphenoxysilane, dimethyldimethoxysilane, dimethyldethoxysilane, dimethyldiisopropoxysilane, dimethyldiphenoxysilane, trimethylmonomethoxysilane, trimethylmonoethoxysilane, trimethylmonoisopropoxysilane, trimethylmonophenoxysilane, monomethyldimethoxymonochlorosilane, monomethyldiethoxymonochlorosilane, dimethylmonoethoxymonochlorosilane, monoethyltriethoxysilane, monoethyltriisopropoxysilane, monoethyltriphenoxysilane, diethyldimethoxysilane, diethyldiethoxysilane, diethyldiphenoxysilane, triethylmonomethoxysilane, triethylmonoethoxysilane, triethylmonophenoxysilane, monoethyldimethoxymonochlorosilane, monoethyldiethoxymonochlorosilane, monoethyldiphenoxymonochlorosilane, monoisopropyltrimethoxysilane, mono-n-butyltrimethoxysilane, mono-n-butyltriethoxysilane, mono-sec-butyltriethoxysilane, monophenyltriethoxysilane, monophenyltriethoxysilane, diphenyldimethoxysilane, diphenyldiethoxysilane, diphenylmonoethoxymonochlorosilane, monomethoxytrichlorosilane, monoisopropoxytrichlorosilane, mono-n-butoxytrichlorosilane, monopentoxytrichlorosilane, monooctoxytrichlorosilane, monostearoxytrichlorosilane, monophenoxytrichlorosilane, mono-p-methylphenoxytrichlorosilane, dimethoxydichlorosilane, diethoxydichlorosilane, diisopropoxydichlorosilane, di-n-butoxydichlorosilane, dioctoxydichlorosilane, trimethoxymonochlorosilane, triethoxymonochlorosilane, triisopropoxymonochlorosilane, tri-n-butoxymonochlorosilane, tri-sec-butoxymonochlorosilane, tetraethoxysilane, tetraisopropoxysilane, vinyltrimethoxysilane, vinyltriethoxysilane, vinyldimethoxymonochlorosilane, vinyldiethoxymonochlorosilane, vinylmethoxydichlorosilane, vinylethoxydichlorosilane, allyltrimethoxysilane, allyltriethoxysilane, allyldimethoxymonochlorosilane, allyldiethoxymonochlorosilane, allylmethoxydichlorosilane, allylethoxydichlorosilane, vinyltriphenoxysilane, vinylethoxydiphenoxysilane, allyltriphenoxysilane, allylethoxydiphenoxysilane, and chain-like or cyclic polysiloxanes having a repeating unit represented by the formula

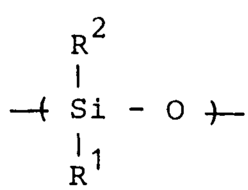

obtained by condensation of the above compounds. These compounds may be used in combination.

(2) Phosphoric acid esters:

Preferred phosphoric acid esters used in the present invention are represented by the general formula

$P(OR^5)_3$

wherein the $R^5$s, which may be alike or different, are each a hydrocarbon radical having 1 to 24, preferably 1 to 18, carbon atoms. Examples includes trimethyl phosphite, triethyl phosphite, tripropyl phosphite, triisopropyl phosphite, tri-n-butyl phosphite, triisobutyl phosphite, trivinyl phosphite, triallyl phosphite, triisodecyl phosphite, triphenyl phosphite, tricyclohexyl phosphite, tris(tert-amylphenyl) phosphite, tris-(nonylphenyl) phosphite, tri(3,5-diethylphenyl) phosphite, tri-o-tolyl phosphite, tri-1-naphthyl phosphite, tri(2-ethylhexyl) phosphite, diphenylethyl phosphite, diphenylisopropyl phosphite,

diphenylisobutyl phosphite, diphenylisodecyl phosphite, phenyldiisooctyl phosphite, phenyldiisodecyl phosphite, phenyldiisobutyl phosphite and mixtures thereof.

(3) Boric acid esters:

Preferred boric acid esters used in the present invention are represented by the general formula $B-(OR^6)_qX_{3-q}$ wherein $R^6$ is a hydrocarbon radical having 1 to 24, preferably 1 to 18, carbon atoms, X is a halogen atom and q is $1 \leqq q \leqq 3$. Examples include monomethoxydichloroboron, monoethoxydichloroboron, monoisopropoxydichloroboron, monooctoxydichloroboron, monostearoxydichloroboron, monophenoxydichloroboron, mono-p-methylphenoxydichloroboron, dimethoxymonochloroboron, diethoxymonochloroboron, diphenoxymonochloroboron, trimethoxyboron, triethoxyboron, triisopropoxyboron, tri-n-butoxyboron, triisobutoxyboron, triphenoxyboron and tri-p-methylphenoxyboron.

(4) Organic acid esters:

Preferred organic acid esters used in the present invention are the esters of saturated or unsaturated, mono- or dibasic organic carboxylic acids having 1 to 24 carbon atoms and alcohols having 1 to 30 carbon atoms. Examples are methyl formate, ethyl acetate, amyl acetate, phenyl acetate, octyl acetate, methyl methacrylate, ethyl stearate, methyl benzoate, ethyl benzoate, n-propyl benzoate, iso-propyl benzoate, butyl benzoate, hexyl benzoate, cyclopentyl benzoate, cyclohexyl benzoate, phenyl benzoate, benzoic acid-4-tolyl, methyl salicylate, ethyl salicylate, methyl p-hydroxybenzoate, ethyl p-hydroxybenzoate, phenyl salicylate, cyclohexyl p-hydroxybenzoate, benzyl salicylate, ethyl α-resorcinol carboxylate, methyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate, allyl benzoate, benzyl benzoate, methyl naphthoate, and ethyl naphthoate.

Particularly preferred are alkyl esters, especially methyl and ethyl esters, of benzoic acid, o- or p-toluic acid and anisic acid.

(5) Heterocyclic carboxylic acid esters:

Preferred heterocyclic carboxylic acid esters used in the present invention are oxygen-containing heterocyclic carboxylic acid esters, nitrogen-containing heterocyclic carboxylic acid esters and sulfur-containing heterocyclic carboxylic acid esters, that is, alkyl esters of carboxylic acids of five-to eight-membered rings containing as a ring constituent at least one atom selected from oxygen, nitrogen and sulfur.

As examples of oxygen-containing heterocyclic carboxylic acid esters, mention may be made of the following: furancarboxylic acid esters, dihydrofurancarboxylic acid esters, tetrahydrofurancarboxylic acid esters, benzofurancarboxylic acid esters, coumarancarboxylic acid esters, pyrancarboxylic acid esters, pyronecarboxylic acid esters, coumarincarboxylic acid esters and isocoumarincarboxylic acid esters. More concrete examples include methyl furan-2-carboxylate, ethyl furan-2-carboxylate, propyl furan-2-carboxylate, butyl furan-2-carboxylate, methyl furan-3-carboxylate, ethyl furan-3-carboxylate, butyl furan-3-carboxylate, methyl furan-2,3-dicarboxylate, methyl furan-2,4-dicarboxylate, methyl furan-2,5-dicarboxylate, methyl furan-3,4-dicarboxylate, methyl 4,5-dihydrofuran-2-carboxylate, ethyl 4,5-dihydrofuran-2-carbosylate, methyl tetrahydrofuran-2-carboxylate, methyl coumaran-2-carboxylate, ethyl coumaran-2-carboxylate, methyl coumarinate, ethyl coumarinate, methyl comanate, ethyl 3-methylfuran-2-carboxylate and ethyl isodehydroacetate.

As examples of nitrogen-containing heterocyclic carboxylic acid esters, mention may be made of the following: pyrrolecarboxylic acid esters, indolecarboxylic acid esters, carbazolecarboxylic acid esters, oxazolecarboxylic acid esters, imidazolecarboxylic acid esters, pyrazolecarboxylic acid esters, pyridinecarboxylic acid esters, phenanthridinecarboxylic acid esters, anthrazolinecarboxylic acid esters, phenanthrolinecarboxylic acid esters, naphthyridinecarboxylic acid esters, oxazinecarboxylic acid esters, thiazinecarboxylic acid esters, pyridazinecarboxylic acid esters, pyrimidinecarboxylic acid esters and pyrazinecarboxylic acid esters. More concrete examples include methyl pyrrole-2-carboxylate, ethyl pyrrole-2-carboxylate, propyl pyrrole-2-carboxylate, butyl pyrrole-2-carboxylate, methyl pyrrole-3-carboxylate, ethyl pyrrole-3-carboxylate, propyl pyrrole-3-carboxylate, butyl pyrrole-3-carboxylate, methyl pyridine-2-carboxylate, ethyl pyridine-2-carboxylate, propyl pyridine-2-carboxylate, butyl pyridine-2-carboxylate, amyl pyridine-2-carboxylate, methyl pyridine-3-carboxylate, ethyl pyridine-3-carboxylate, propyl pyridine-3-carboxylate, butyl pyridine-3-carboxylate, amyl pyridine-3-carboxylate, methyl pyridine-4-carboxylate, ethyl pyridine-4-carboxylate, propyl pyridine-4-carboxylate, butyl pyridine-4-carboxylate, amyl pyridine-4-carboxylate, methyl pyridine-2,3-dicarboxylate, ethyl pyridine-2,3-dicarboxylate, methyl pyridine-2,5-dicarboxylate, ethyl pyridine-2,5-dicarboxylate, methyl pyridine-2,6-dicarboxylate, ethyl pyridine-2,6-dicarboxylate, methyl pyridine-3,5-dicarboxylate, ethyl pyridine-3,5-dicarboxylate, methyl quinoline-2-carboxylate, ethyl quinoline-2-carboxylate, ethyl dimethylpyrrolecarboxylate, ethyl N-methylpyrrolecarboxylate, ethyl 2-methylpyridinecarboxylate, ethyl piperidine-4-carboxylate, ethyl piperidine-2-carboxylate and ethyl pyrrolidine-2-carboxylate.

As examples of sulfur-containing heterocyclic carboxylic acid esters, mention may be made of the following: thiophenecarboxylic acid esters, thianaphthenecarboxylic acid esters, isothianaphthenecarboxylic acid esters, benzothiophenecarboxylic acid esters, phenoxathiincarboxylic acid esters, thiaxanthenecarboxylic acid esters and thioindoxylcarboxylic acid esters. More concrete examples include methyl thiophene-2-carboxylate, ethyl thiophene-2-carboxylate, butyl thiophene-2-carboxylate, propyl thiophene-2-carboxylate, amyl thiophene-2-carboxylate, methyl thiophene-3-carboxylate, ethyl thiophene-3-carboxylate, propyl thiophene-3-carboxylate, butyl thiophene-3-carboxylate, amyl thiophene-3-carboxylate, methyl thiophene-2,3-dicarboxylate, ethyl thiophene-2,3-dicarboxylate, methyl thiophene-2,4-dicarboxylate, ethyl thiophene-2,4-dicarboxylate, methyl thiophene-2,5-dicarboxylate, ethyl thiophene-2,5-dicarboxylate, methyl 2-thienylacetate, ethyl 2-thienylacetate, propyl 2-thienylacetate, butyl 2-thienylacetate, amyl 2-thienylacetate, methyl 2-thienylacrylate, ethyl 2-thienylacrylate, methyl 2-thienylpyruvate, ethyl 2-thienylpyruvate, methyl thianaphthene-2-carboxylate, ethyl thianaphthene-2-carboxylate, methyl thianaphthene-3-carboxylate, ethyl thianaphthene-3-carboxylate, methyl thianaphthene-2,3-dicarboxylate, ethyl thianaphthene-2,3-dicarboxylate, methyl 3-hydroxy2-thianaphthenecarboxylate, ethyl 3-hydroxy-2-thianaphthenecarboxylate, methyl 2-thianaphthenylacetate, ethyl 2-thianaphthenylacetate, methyl 3-thianaphthenylacetate, ethyl 3-thianaphthenylacetate, methyl benzothiophene-2-carboxylate, ethyl benzothiophene-2-carboxylate, methyl benzothiophene-3-carboxylate, ethyl benzothiophene-3-carboxylate, methyl benzothiophene-4-carboxylate, ethyl benzothiophene-4-carboxylate, methyl phenoxathiin-1-carboxylate, ethyl phenoxathiin-1-carboxylate, methyl phenoxathiin-2-carboxylate, ethyl phenoxathiin-2-carboxylatee, methyl phenoxathiin-3-carboxylate and ethyl phenoxathiin-3-carboxylate.

Among the above heterocyclic compounds the oxygen-containing heterocyclic carboxylic acid esters are most preferred. Particularly, furan-carboxylic acid esters and tetrahydrofuran carboxylic acid esters are preferred.

(6) Diesters:

Preferred diesters used in the present invention are polycarboxylic acid esters and polybasic hydroxyl compound esters, which are those having a structure represented by the general formula

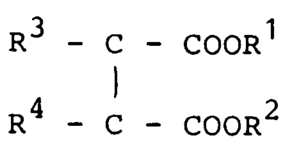
,
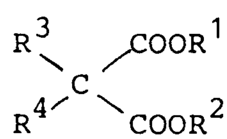

or
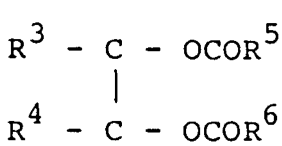

wherein $R^1$ is a substituted or unsubstituted hydrocarbon group, $R^2$, $R^5$ and $R^6$ are each hydrogen or a substituted or unsubstituted hydrocarbon group, $R^3$ and $R^4$ are each hydrogen or a substituted or unsubstituted hydrocarbon, preferably at least one of $R^3$ and $R^4$ is a substituted or unsubstituted hydrocarbon group. $R^3$ and $R^4$ may be bonded together. As the substituent of the substituted hydrocarbon group, mention may be made those containing a hetero atom such as N, O or S, e.g. C-O-C, COOR, COOH, OH, $SO_3H$, -C-N-C-, and $NH_2$.

Preferable polybasic carboxylic acid esters include aliphatic polybasic carboxylic acid esters such as diethyl succinate, dibutyl succinate, diethyl methylsuccinate, diisobutyl α-methyl-glutarate, diethyl methyl-nalonate, diethyl ethyl-malonate, diethyl isopropyl-malonate, diethyl butyl-malonate, diethyl

phenyl-malonate, diethyl diethyl-malonate, diethyl dibutyl-malonate, monooctyl maleate, dioctyl maleate, dibutyl maleate, dibutyl butyl-maleate, diethyl butyl-maleate, diisopropyl ss-methyl-glutarate, diallyl ethyl-succinate, di-2-ethylhexyl fumarate, diethyl itaconate and dioctyl citraconate; alicyclic polybasic carboxylic acid esters such as diethyl 1,2-cyclohexane-carboxylate, diisobutyl 1,2-cyclohexane-carboxylate and diethyl tetrahydrophthalate; aromatic polybasic carboxylic acid esters such as monoethyl phthalate, dimethyl phthalate, methyl ethyl phthalate, monoisobutyl phthalate, diethyl phthalate, ethyl isopropyl phthalate, di-n-propyl phthalate, diisopropyl phthalate, di-n-butyl phthalate, diisobutyl phthalate, di-n-heptyl phthalate, di-2-ethyl-hexyl phthalate, di-n-octyl phthalate, dineopentyl phthalate, didecyl phthalate, benzyl butyl phthalate, diphenyl phthalate, diethyl naphthalene-dicarboxylate, dibutyl naphthalene-dicarboxylate, triethyl trimellitate and dibutyl trimellitate, heterocyclic polybasic carboxylic acid esters such as 3,4-furan-dicarboxylic acid esters.

Preferable examples of the polybasic hydroxyl compound esters include 1,2-diacetoxy benzene, 1-methyl-2,3-diacetoxy benzene, and 2,3-diacetoxy naphthalene.

Other examples of the polybasic carboxylic acid esters to be supported on the titanium catalyst component include long chain dicarboxylic acid esters such as diethyl adipate, diisobutyl adipate, diisopropyl sebacate, di-n-butyl sebacate, di-n-octyl sebacate and di-n-ethyl-hexyl sebacate.

(7) Phenols:

Preferred phenols used in the present invention are represented by the general formula

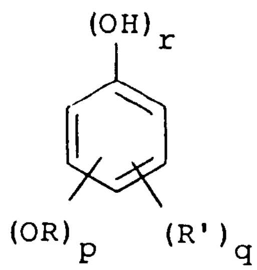

wherein R is hydrogen, halogen, or a hydrocarbon radical having 1 to 24, preferably 1 to 18, carbon atoms, R' is a hydrocarbon radical having 1 to 24, preferably 1 to 18, carbon atoms, and r, p and q are integers selected from the following ranges: $1 \leqq r \leqq 3$, $0 \leqq p \leqq 6$, $0 \leqq q < 6$, provided $1 \leqq r + p + q < 6$. Examples include phenol, 1-naphthol, 2-naphthol, 2-phenanthrol, 3-phenanthrol, anthranol, methylphenol, ethylphenol, isopropylphenol, dimethylphenol, diethylphenol, dibutylphenol, trimethylphenol, triethylphenol, 2-chlorophenol, 3-bromophenol, 4-chlorophenol, 2,6-dichlorophenol, di-t-butyl-p-cresol, 2-cyclohexylphenol, 2-allylphenol, 3-hydroxystyreneisopropenylphenol, catechol, hydroquinone, 2,6-dihydroxytoluene, vinylcatechol, pyrogallol, methoxyphenol and 2-isopropoxyphenol, with phenol and 1-naphthol being particularly preferred.

(8) Ketones:

Preferred ketone compounds used in the present invention are (i) compounds represented by the general formula

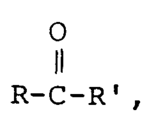

(ii) compounds represented by the general formula

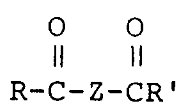

wherein R and R', which may alike or different, are each a hydrocarbon radical such as alkyl, alkenyl, aryl or aralkyl having 1 to 24 carbon atoms, or an organic radical containing oxygen, nitrogen, sulfur, chlorine or other atom, and R and R' may form a cyclic structure, Z is

$$-(CH_2)_n-,$$

an aromatic hydrocarbon radical or an alicyclic hydrocarbon radical, n is $0 \leqq n \leqq 10$, and (iii) quinones. Mixtures thereof may be used.

Examples of the compound (i) having the general formula

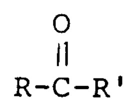

include acetone, methyl ethyl ketone, methyl n-propyl ketone, diethyl ketone, 2-hexanone, 3-hexanone, methyl t-butyl ketone, diisopropyl ketone, di-n-amyl ketone, distearyl ketone, ethyl benzyl ketone, 2,5-dimethyl-3-hexanone, 2-methyl-3-heptanone, 2-octanone, 3-octanone, phorone, 2,6-dimethyl-4-heptanone, 2-nonanone, benzalacetone, benzylacetone, 3-decanone, benzyl isopropyl ketone, 2-undecanone, benzyl n-butyl ketone, 3-dodecanone, 2-methyl-4-undecanone, isobutyl styryl ketone, 2-tridecanone, α-ionone, β-ionone, 1,1-diphenyl acetone, 1,3-diphenyl-2-propanone, 8-pentadecanone, 3-hexadecanone, dicinnamalacetone, heneicosanone, 1,2-triconanone, heritriacontanone, 18-pentatriacontanone, 1,5-diphenyl-1,4-pentadiene-3-one, 9-heptadecanone, β-methyl ionone, γ-methyl ionone, benzophenone, acetophenone, propiophenone, p-methyl acetophenone, m-methyl acetophenone, phenyl propenyl ketone, benzal acetophenone, 1-phenyl-1,3-butadione, o-ethyl acetophenone, isopropyl phenyl ketone, isovalerophenone, valerophenone, 2-acetonaphthone, 1-acetonaphthone, cyclopentyl phenyl ketone, p-n-butyl acetophenone, n-hexanophenone, n-heptanophenone, benzyl phenyl ketone, n-octanophenone, chalcone, 4,4-dimethyl benzophenone, n-decanophenone, β-naphthyl phenyl ketone, laurophenone, n-tetradecanophenone, cyclohexanone, 3-methyl cyclohexanone, 2-methyl cyclohexanone, cyclopentanone, cycloheptanone, 1-indanone, 2,6-dimethyl cyclohexanone, 3,5-dimethyl cyclohexanone, 3,3,5-trimethyl cyclohexanone, α-tetralone, 2-adamantanone, camphor, 2-cyclopentyl cyclopentanone, 4-t-butyl cyclohexanone, menthone, 2-n-hexyl cyclopentanone, 4-n-pentyl cyclohexanone, 2-cyclohexyl cyclohexanone, cyclodecanone, 2-n-heptyl cyclopentanone, 9-fluorenone, 2-benzylidene cyclohexanone, anthrone, 5-cyclohexadecene-1-one, cyclooctanone, 2-acetyl cyclopentanone, and 2-ethyl cyclohexanone.

Examples of the compound (ii) having the general formula

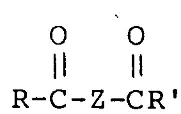

include diacetyl, acetylacetone, 2,3-pentadione, acetonylacetone, 2,3-hexadione, 2,3-heptadione, 6-methyl-2,4-heptadione, dibenzoylmethane, dibenzoyl, 1-phenyl-1,2-propanedione, and p-diacetyl benzene.

Examples of the quinone (iii) include benzoquinone, duroquinone, α-naphthoquinone, β-naphthoquinone, p-toluquinone, p-xyloquinone, triquinoyl, acenaphthenequinone, anthraquinone, 9,10-phenanthrenequinone, 2,5-di-t-butyl-p-quinone, 2-methyl anthraquinone, 2-ethyl anthraquinone, 2-t-butyl anthraquinone, 1,2-benzanthraquinone, 2,5-diphenyl-p-benzoquinone, 1,2-cyclohexanedione, and 1,4-cyclohexanedione.

(9) Ethers:

Preferred ethers used in the present invention are represented by the general formula R-O-R' wherein R and R' are each a hydrocarbon radical having 1 to 24, preferably 1 to 18, carbon atoms.

Examples include methyl ether, ethyl ether, propyl ether, isopropyl ether, butyl ether, isobutyl ether, n-amyl ether, isoamyl ether, methyl ethyl ether, methyl propyl ether, methyl isopropyl ether, methyl butyl ether, methyl isobutyl ether, methyl n-amyl ether, methyl isoamyl ether, ethyl propyl ether, ethyl isopropyl ether, ethyl butyl ether, ethyl isobutyl ether, ethyl n-amyl ether, ethyl isoamyl ether, vinyl ether, allyl ether, methyl vinyl ether, methyl allyl ether, ethyl vinyl ether, ethyl allyl ether, anisole, phenetole, phenyl ether, benzyl ether, phenyl benzyl ether, 1-naphthyl ether and 2-naphthyl ether.

Among the compounds just exemplified above, those wherein at least one substituent is an aromatic hydrocarbon radical are preferred. Particularly, anisole, phenetole, phenyl ether, benzyl ether, phenyl benzyl ether, 1-naphthyl ether and 2-naphthyl ether are preferred.

(10) Acid anhydrides:

Preferred examples of organic carboxylic acid anhydrides used in the present invention are those having the following general formulae:

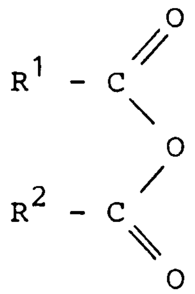
... (I)

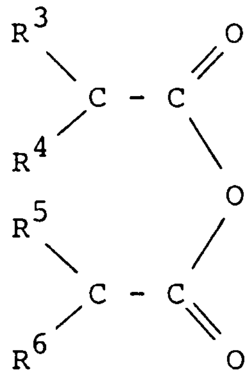
... (II)

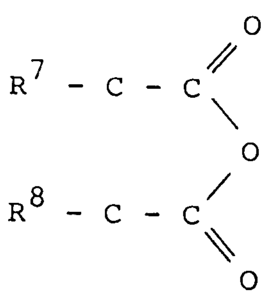
... (III)

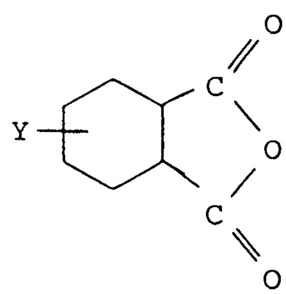
... (IV)

wherein $R^1$, $R^2$, $R^3$, $R^4$, $R^5$, $R^6$, $R^7$ and $R^8$ are each hydrogen, or an alkyl, alkenyl or aryl having 1 to 24 carbon atoms, Y is hydrogen, halogen, an alkyl or alkenyl having 1 to 23 carbon atoms. In the formula (IV), the six membered ring may be a benzene ring, or a saturated or partially unsaturated carbon-to-carbon six membered ring.

Examples of the organic carboxylic acid anhydride include acetic anhydride, propionic anhydride, n-butyric anhydride, isobutyric anhydride, caproic anhydride, isocaproic anhydride, caprylic anhydride, lauric anhydride, palmitic anhydride, stearic anhydride, crotonic anhydride, phenyl-acetic anhydride, succinic anhydride, dimethyl-succinic anhydride, glutaric anhydride, maleic anhydride, diphenyl-maleic anhydride, benzoic anhydride, toluic anhydride, phthalic anhydride, naphthalic anhydride, and pyromellitic dianhydride.

Among them, benzoic anhydride and toluic anhydride are most preferable.

(11) Hindered amines (piperidines):

Preferred examples of hindered amines used in the present invention are heterocyclic compounds having the general formula

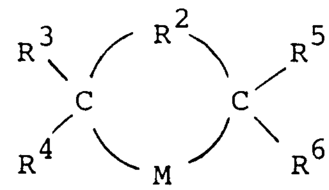

wherein $R^2$ is a hydrocarbon radical, preferably substituted or unsubstituted alkylene, more preferably alkylene having 3 or 4 carbon atoms, the substituent in the above substituted alkylene radical is, for example, a hydrocarbon radical such as alkyl, acyloxy or alkoxy, $R^3$, $R^4$, $R^5$ and $R^6$ are each hydrogen or a hydrocarbon radical which may be substituted, at least one of $R^3$ and $R^4$ and at least one of $R^5$ and $R^6$ are each a hydrocarbon radical, and $R^3$ and $R^4$ or $R^5$ and $R^6$ may bond together to form a carbonaceous or heterocyclic ring, preferably $R^3$, $R^4$, $R^5$ and $R^6$ are all hydrocarbon radicals, and when either $R^3$ and $R^4$ or $R^5$ and $R^6$ are hydrogens, the others are preferably secondary or tertiary hydrocarbon radicals, M is N or 0.

As examples of the heterocyclic compound, mention may be made compounds having the general formulae:

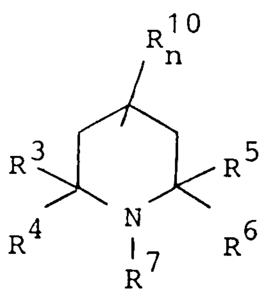

or

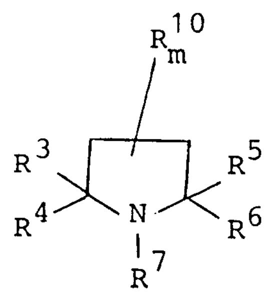

wherein $R^3$, $R^4$, $R^5$ and $R^6$ are as defined above, $R^7$ is hydrogen or a substituent such as hydrocarbon radical, metal or alkyl metal, $R^{10}$ is hydrogen or a hydrocarbon radical such as alkyl, acyloxy or alkoxy, $0 \leqq n \leqq 3$, $0 \leqq m \leqq 2$, and n or m $R^{10}$s may be alike or different.

Concrete examples include 2,6-substituted piperidines such as

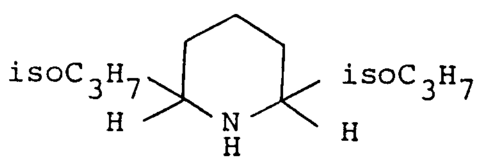
,

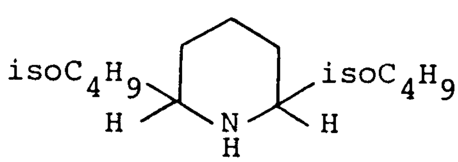
,

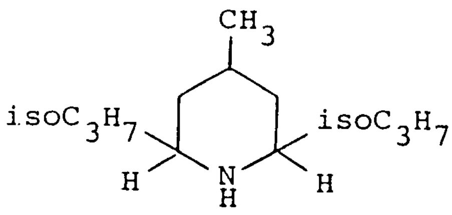 ,

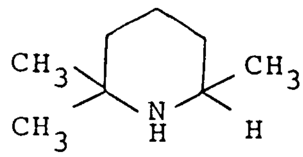 ,

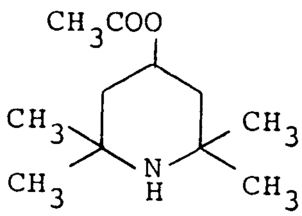 ,

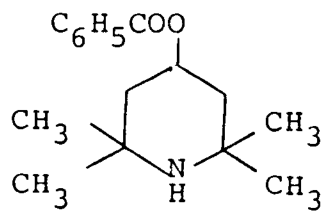 ,

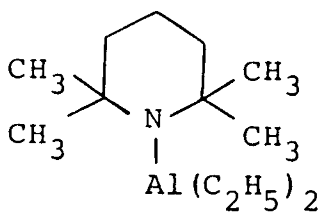 and

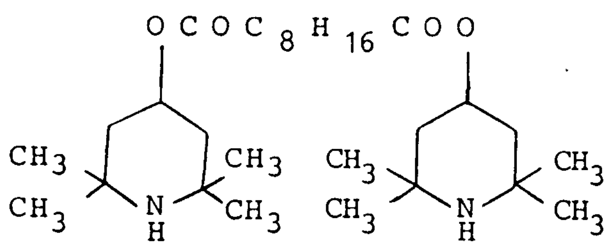 ;

2,5 – substituted pyrrolidines such as

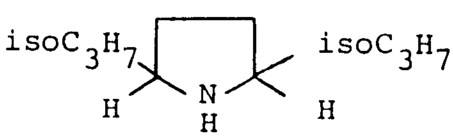 ,

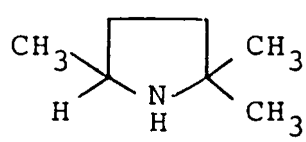 ,

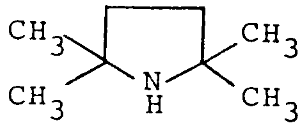 , 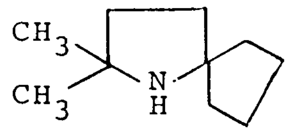 ,

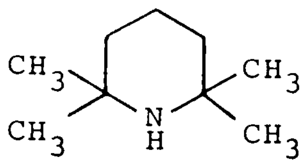 , 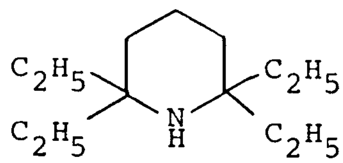 ,

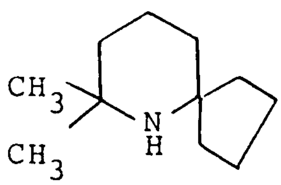

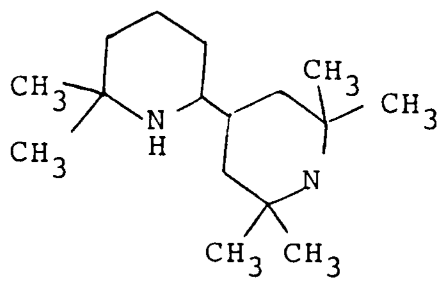 ,

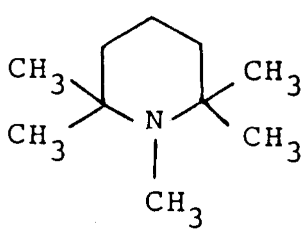 , 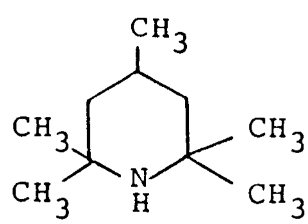 ,

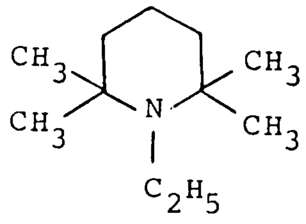 , 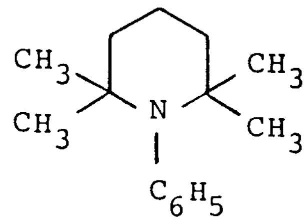 ,

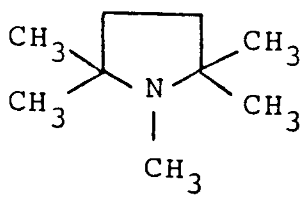 and 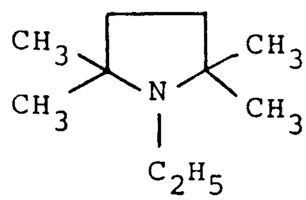 .

Among these compounds, compounds having the structure of 2,2,6,6-tetramethylpiperidine, 2,6-diisopropylpiperidine, 2,2,5,5-tetramethylpyrrolidine or 2,5-diisopropylpyrrolidine are preferable. 2,2,6,6-tetramethylpiperidine is most preferable.

Thus, the solid material (b) obtained by contacting the solid material (a) with the electron donor is further reacted with the titanium compound to prepare the solid catalyst component, which component is then used in the polymerization together with an organometallic compound.

As the said organometallic compound there may be used the organometallic compound which is used as the foregoing component (3), although it is not always necessary that the organometallic compound used in the polymerization be the same as that used in the preparation of the solid catalyst component.

The olefin polymerization reaction using the catalyst of the present invention is carried out in the same way as the conventional olefin polymerization reaction using a Ziegler type catalyst. That is, the reaction is conducted in vapor phase in a substantially oxygen- and water-free condition, or in the presence of an inert solvent, or by utilizing monomer per se as solvent. Olefin polymerizing conditions involve a temperature in the range of 20° to 200°C, preferably 40° to 180°C, and a pressure in the range of atmospheric pressure to 69 barG (70 $kg/cm^2 \cdot G$), preferably 2 to 59 bar.G (2 to 60 $kg/cm^2 \cdot G$). The molecular weight can be adjusted to some extent by changing polymerization conditions such as the polymerization temperature and the catalyst mol ratio, but the addition of hydrogen into the polymerization system is more effective for this purpose. Of course, using the catalyst of the present invention there can be performed two or more multi-stage polymerization reactions involving different polymerization conditions such as different hydrogen concentrations and different polymerization temperatures.

The process of the present invention is applicable to the polymerization of all olefins that are polymerizable using Ziegler type catalysts. For example, it is suitable for the homopolymerization of $\alpha$-olefins such as ethylene, propylene, butene-1 and 4-methylpentene-1, as well as random and block copolymerizations of ethylene/propylene, ethylene/butene-1 and propylene/butene-1. Copolymerization with dienes for the modification of polyolefins is also preferable; for example, ethylene/butadiene, ethylene/1,4-hexadiene and propylene/1,4-hexadiene.

The process of the present invention is particularly effective in polymerizing or copolymerizing $C_3$-$C_8$ $\alpha$-olefins in high stereospecific condition.

Examples of the present invention will be described below to further illustrate the present invention, but it is to be understood that the invention is not limited thereto.

By using the catalyst of the present invention there is obtained a polyolefin which is spherical, not amorphous, has good fluidity, has a large average particle diameter and a narrow particle size distribution, and has a reduced proportion of fine particles. Besides, the bulk density of the polyolefin produced is high. These characteristics are very advantageous to the polymerizing operation. Moreover, the polyolefin even directly in the powdered state, to say nothing of pellets thereof, can be subjected to forming, and there seldom occurs trouble during the forming operation. Thus, the polyolefin can be prepared in an extremely advantageous manner.

Further, since there can be prepared a highly stereospecific polyolefin in extremely high activity, the partial pressure of monomer during polymerization is low and the amount of the catalyst remaining in the polymer produced becomes very small in the short time required for the polymerization, thus permitting omission of the catalyst removing step in the polyolefin manufacturing process. Additionally, the proportion of an atactic portion in the resulting polymer is extremely small. Thus, various effects are attained by the present invention.

Example 1

(a) Preparation of Solid Catalyst Component

1.2 g of anhydrous magnesium chloride and 5 g of 600°C-calcined silica (Fuji-Davison #952) were placed in a three-necked flask having a capacity of 200 ml and equipped with a stirrer and a reflux condenser, then 100 ml of tetrahydrofuran was added, allowing reaction to take place at 60°C for 2 hours, followed by drying under reduced pressure to remove the tetrahydrofuran. Then, 50 ml of a solution (2 mmol/ml) of diethylaluminum monochloride in hexane was added and reaction was allowed to take place or 2 hours under reflux of hexane. Thereafter, the reaction product was recovered by filtration, washed with 5 x 50 ml hexane and dried under reduced pressure to obtain a solid material (a).

To the solid material (a) thus obtained were added 2.5 ml (12 mmol) of vinylethoxysilane and 2.0 ml (8 mmol) of triphenyl phosphite, then 50 ml of hexane was added, allowing reaction to take place for 2 hours under reflux of hexane. Subsequent filtration and drying under a nitrogen gas stream afforded a solid material (b).

To the solid material (b) was added 50 ml of titanium tetrachloride and reaction was allowed to take place at 80°C for 2 hours. Thereafter, the reaction product was recovered by filtration, then washed with 8 x 50 ml hexane and dried under reduced pressure to obtain a solid catalyst component containing 10 mg of titanium per gram thereof.

(b) Polymerization

A stainless steel autoclave having a capacity of 3 liters and equipped with a stirrer was purged with nitrogen and then charged with 1,500 ml of hexane. Then, 2.5 mmol of triethylaluminum, 1.4 mmol of phenyltriethoxysilane and 50 mg of the solid catalyst component prepared were added. Further, hydrogen was fed so as to give a partial pressure thereof in vapor phase of 0.05 bar (0.05 kg/cm$^2$), and thereafter the temperature was raised to 70°C with stirring. The system was pressurized to 1 bar.G (1 kg/cm$^2$•G) with the vapor pressure of hexane. Then, propylene was introduced to a total pressure of 7 bar.G (7 kg/cm$^2$•G) to start polymerization. The polymerization was carried out for 2 hours while introducing propylene continuously to maintain the total pressure at 7 bar.G (7 kg/cm$^2$•G).

After the polymerization, excess propylene was removed, followed by cooling, and then the contents were withdrawn and dried to give 200 g of spherical particles having an average particle diameter of 1,000 µm. This amount was the total amount of product, including amorphous one. Catalytic activity was 333g.polypropylene/g.solid•hr•$C_3H_6$ pressure, 33.3 kg. polypropylene/g.Ti•hr•$C_3H_6$ pressure. The present residue ("total ii", hereinafter) of all polymer including the solvent-soluble polymer after extraction in boiling n-heptane was 97.8 wt.%, and the melt flow rate ("MFR", hereinafter) was 8.5. Bulk density was 0.41 g/cm$^3$ Further, good fluidity was confirmed visually. Results are as shown in Table 1.

Comparative Example 1

A solid catalyst component was prepared in the same way as in Example 1 except that the diethylaluminum monochloride was not used. Then, using the solid catalyst component thus obtained, there was conducted polymerization in the same manner as in Example 1 to afford 175 g of amorphous polypropylene. Catalytic activity was 283g.polypropylene/g.solid•hr•$C_3H_6$ pressure. Total ii, MFR and bulk density were 95.2 wt.%, 9.7 and 0.28 g/cm$^3$, respectively. Fluidity was visually found to be poor. Results are as shown in Table 1.

Example 2

A solid catalyst component was prepared in the same way as in Example 1 except that triethylaluminum was used in place of the diethylaluminum monochloride, and using the solid catalyst

component thus prepared, there was conducted polymerization in the same manner as in Example 1. Results are as shown in Table 1.

Example 3

A solid catalyst component was prepared in the same way as in Example 1 except that ethylaluminum sesquichloride was used in place of the diethylaluminum monochloride, and using the solid catalyst component thus prepared, there was conducted polymerization in the same manner as in Example 1. Results are as shown in Table 1.

Example 4

A solid catalyst component was prepared in the same way as in Example 1 except that 0.8 g (8.5 mmol) of phenol and 0.5 g (3.0 mmol) of phenyl ether were used in place of the triphenyl phosphite, and using the solid catalyst component thus prepared, there was conducted polymerization in the same manner as in Example 1 except that the amount of the solid catalyst component used was changed from 50 mg to 20 mg. Results are as shown in Table 1.

Comparative Example 2

A solid catalyst component was prepared in the same way as in Example 4 except that the diethylaluminum monochloride was not used, then using the solid catalyst component thus prepared, there was conducted polymerization in the same manner as in Example 4 to afford 150 g of amorphous polypropylene. Catalytic activity was 625g.polypropylene/g.solid•hr•$C_3H_6$ pressure. Total ii, MFR and bulk density were 95.0 wt.%, 8.8 and 0.27 g/$cm^3$, respectively. Fluidity was poor like Comparative Example 1. Results are as shown in Table 1.

Examples 5 and 6

Solid catalyst components were prepared in the same way as in Example 1 except that ethyl acetate (in Example 5) and ethanol (in Example 6) were used in place of the tetrahydrofuran, and using the solid catalyst components thus prepared, there were performed polymerizations in the same manner as in Example 1. Results are as shown in Table 1.

Example 7

(a) Preparation of Solid Catalyst Component

5 g of 600°C-calcined silica (Fuji-Davison #952) was placed in a three-necked flask having a capacity of 200 ml and equipped with a stirrer and a reflux condenser, then 50 ml of a solution (2 mmol/ml) of diethylaluminum monochloride in hexane was added and reaction was allowed to take place for 2 hours under reflux of hexane. Thereafter, the reaction product was recovered by filtration, then washed with 5 x 50 ml hexane and dried under reduced pressure.

1.2 g of anhydrous magnesium chloride and the above pretreated silica were charged into a three-necked 200 ml flask equipped with a stirrer and a reflux condenser, then 100 ml of tetrahydrofuran was added and reaction was allowed to take place at 60°C for 2 hours, followed by drying under reduced pressure to remove the tetrahydrofuran. Then, 50 ml of a solution (2 mmol/ml) of diethylaluminum monochloride in hexane was added and reaction was allowed to take place for 2 hours under reflux of hexane. Thereafter, the reaction product was recovered by filtration, then washed with 5 x 50 ml hexane and dried under reduced pressure to give a solid material (a).

Then, in the same manner as in Example 1 there were obtained a solid material (b) and then a solid catalyst component.

(b) Polymerization

Polymerization was performed in the same manner as in Example 1. Results are as shown in Table 1.

Table 1

| | Solid Catalyst Component | | | | | | | | |
|---|---|---|---|---|---|---|---|---|---|
| | Inorganic Oxide | Mg Compound | Solvent | Organometallic Compound | ED(1) | ED(2) | ED(3) | Ti Compound | Titanium Content (mg) |
| Example 1 | $SiO_2$ | $MgCl_2$ | THF | DEAC | $CH_2=CH-Si(OEt)_3$ | $P(O\phi)_3$ | - | $TiCl_4$ | 10 |
| " 2 | " | " | " | TEA | " | " | - | " | 12 |
| " 3 | " | " | " | EASC | " | " | - | " | 14 |
| " 4 | " | " | " | DEAC | " | $\phi OH$ | $\phi_2O$ | " | 15 |
| " 5 | " | " | EA | " | " | $P(O\phi)_3$ | - | " | 9 |
| " 6 | " | " | EtOH | " | " | " | - | " | 11 |
| " 7 | $SiO_2$/DEAC | " | THF | " | " | " | - | " | 11 |
| Comparative Example 1 | $SiO_2$ | " | " | - | " | " | - | " | 13 |
| " 2 | " | " | " | - | " | $\phi OH$ | $\phi_2O$ | " | 17 |

Table 1 (continued)

| | Organo-metallic Compound | Electron Donor | Yield of Polypropylene (g) | Catalytic Activity (A)*1 | Catalytic Activity (B)*2 | Total ii (wt.%) | Bulk Density ($g/cm^3$) | MFR (g/10 min) | Fluidity |
|---|---|---|---|---|---|---|---|---|---|
| Example 1 | TEA | $\phi Si(OEt)_3$ | 200 | 333 | 33.3 | 97.8 | 0.41 | 8.5 | Good |
| " 2 | " | " | 185 | 308 | 25.7 | 97.5 | 0.39 | 8.0 | " |
| " 3 | " | " | 210 | 350 | 25.0 | 97.3 | 0.41 | 7.7 | " |
| " 4 | " | " | 175 | 729 | 48.6 | 97.6 | 0.42 | 8.1 | " |
| " 5 | " | " | 190 | 317 | 35.1 | 97.7 | 0.40 | 8.2 | " |
| " 6 | " | " | 190 | 317 | 28.8 | 97.5 | 0.41 | 8.4 | " |
| " 7 | " | " | 220 | 367 | 33.3 | 97.7 | 0.43 | 7.9 | " |
| Comparative Example 1 | " | " | 175 | 283 | 21.8 | 95.2 | 0.28 | 9.7 | Poor |
| " 2 | " | " | 150 | 625 | 36.8 | 95.0 | 0.27 | 8.8 | " |

*1 (A) : g.polypropylene/g.solid·hr·$C_3H_6$ pressure

*2 (B) : Kg.polypropylene/g.Ti·hr·$C_3H_6$ pressure

Example 8

A solid catalyst component was prepared in the same way as in Example 1 except that ethylaluminum dichloride was used in place of the diethylaluminum monochloride, and using the solid catalyst component

thus prepared, there was conducted polymerization in the same manner as in Example 1. Results are as shown in Table 2.

Example 9

A solid catalyst component was prepared in the same way as in Example 4 except that 2.6 g (8.5 mmol) of triphenyl phosphite and 0.3 g (3.0 mmol) of ethyl acetate were used in place of the phenol and diethyl aluminum, and using the solid catalyst component thus prepared, there was conducted polymerization in the same manner as in Example 4. Results are as shown in Table 2.

Examples 10 - 18

Solid catalyst components were prepared in the same way as in Example 1 except that diethyl phthalate (Example 10), 2,2,6,6-tetramethylpiperidine (Example 11), phenol (Example 12). ethyl furan-2-carboxylate (Example 13), ethyl thiophene-2-carboxylate (Example 14), phthalic anhydride (Example 15), triphenoxy boron (Example 16), dibenzoyl methane (Example 17) and ethyl benzoate (Example 18) were used, respectively, in place of the triphenyl phosphite, and using the solid catalyst components thus prepared, there were conducted polymeizations in the same manner as in Example 1. Results are as shown in Table 2.

Table 2

| | Solid Catalyst Component | | | | | | | | |
|---|---|---|---|---|---|---|---|---|---|
| | Inorganic Oxide | Mg Compound | Solvent | Organo-metallic Compound | ED (1) | ED(2) | ED(3) | Ti Compound | Titanium Content (mg) |
| Example 8 | $SiO_2$ | $MgCl_2$ | THF | EADC | $CH_2$=CH-Si(OEt)$_3$ | P(Oφ)$_3$ | — | $TiCl_4$ | 11 |
| " 9 | " | " | " | DEAC | " | " | EA | " | 12 |
| " 10 | " | " | " | " | " | 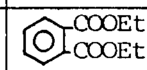 | — | " | 10 |
| " 11 | " | " | " | " | " | 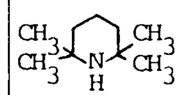 | — | " | |
| " 12 | " | " | " | " | " | φOH | — | " | 11 |
| " 13 | " | " | " | " | " | 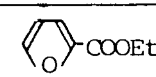 | — | " | 12 |
| " 14 | " | " | " | " | " | 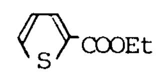 | — | " | 17 |
| " 15 | " | " | " | " | " | 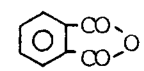 | — | " | 18 |
| " 16 | " | " | " | " | " | B(Oφ)$_3$ | — | " | 15 |
| " 17 | " | " | " | " | " | (φCO)$_2$CH$_2$ | — | " | 13 |
| " 18 | " | " | " | " | " | φCOOEt | — | " | 19 |

Table 2 (continued)

| | Organo-metallic Compound | Electron Donor | Yield of Polypropylene (g) | Catalytic Activity (A)*1 | Catalytic Activity (B)*2 | Total ii (wt.%) | Bulk Density ($g/cm^3$) | MFR (g/10 min) | Fluidity |
|---|---|---|---|---|---|---|---|---|---|
| Example 8 | TEA | $\phi Si(OEt)_3$ | 210 | 350 | 31.8 | 97.6 | 0.43 | 7.8 | Good |
| " 9 | " | " | 210 | 350 | 29.2 | 97.8 | 0.42 | 7.0 | " |
| " 10 | " | " | 190 | 317 | 31.7 | 97.8 | 0.40 | 7.5 | " |
| " 11 | " | " | 185 | 308 | 22.0 | 97.5 | 0.39 | 7.3 | " |
| " 12 | " | " | 200 | 333 | 30.3 | 97.3 | 0.39 | 7.9 | " |
| " 13 | " | " | 180 | 300 | 25.0 | 97.1 | 0.40 | 8.5 | " |
| " 14 | " | " | 195 | 325 | 19.1 | 94.5 | 0.42 | 9.0 | " |
| " 15 | " | " | 175 | 292 | 16.2 | 96.3 | 0.38 | 9.3 | " |
| " 16 | " | " | 215 | 358 | 23.9 | 96.5 | 0.38 | 7.7 | " |
| " 17 | " | " | 210 | 350 | 26.9 | 96.0 | 0.41 | 7.0 | " |
| " 18 | " | " | 195 | 325 | 17.1 | 96.0 | 0.39 | 9.5 | " |

*1 (A) : g.polypropylene/g.solid·hr·$C_3H_6$ pressure

*2 (B) : Kg.polypropylene/g.Ti·hr·$C_3H_6$ pressure

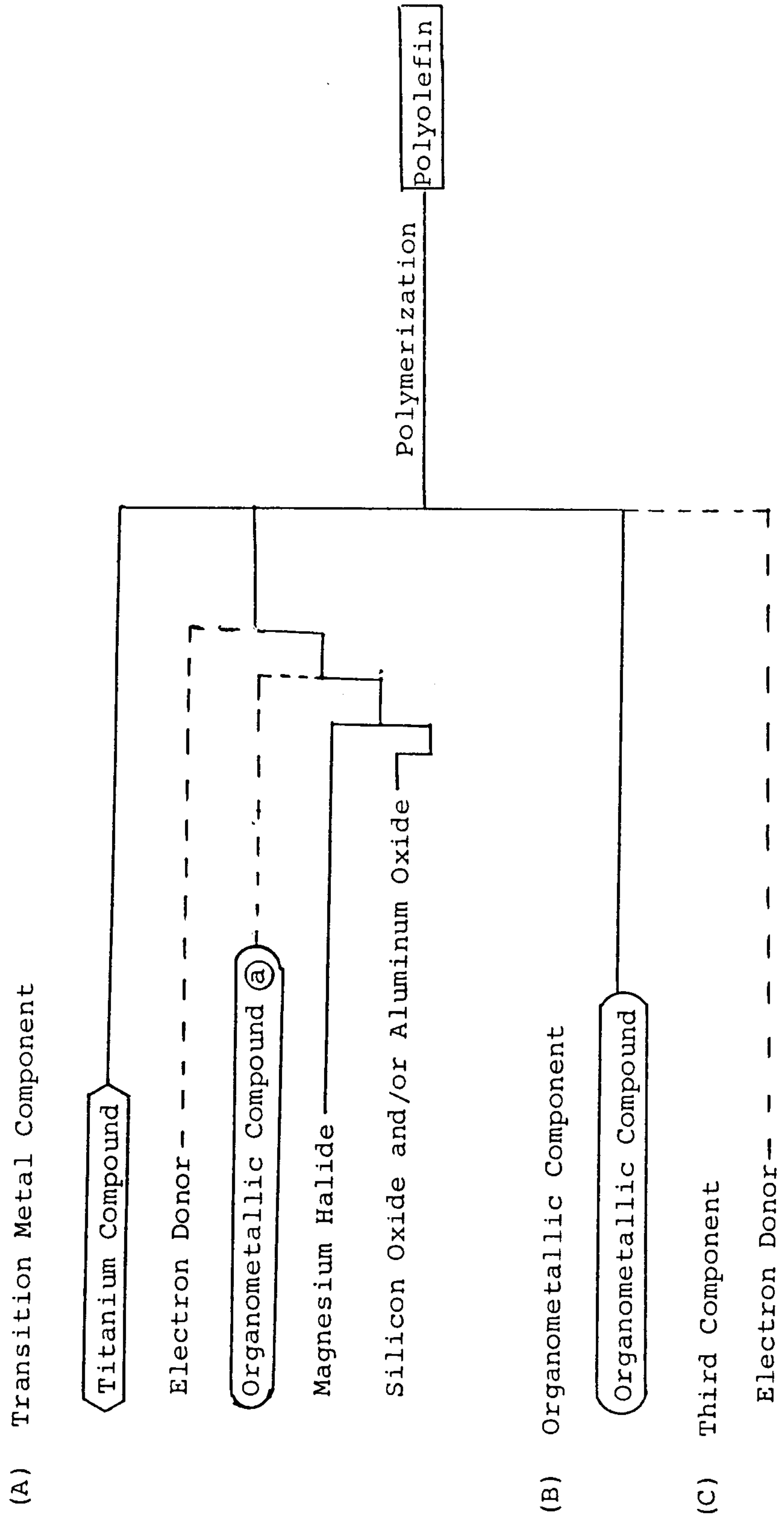


## Claims

1. A process for preparing a polyolefin by homopolymerizing or copolymerizing an olefin or olefins using a catalyst comprising a solid catalyst component and an organometallic compound, said solid catalyst

component being obtained by contacting at least a titanium compound and/or a vanadium compound with a solid material (a), said solid material (a) being obtained by contacting the reaction product of components (1) and (2) with component (3) wherein components (1), (2) and (3) are:
(1) a silicon oxide and/or an aluminium oxide,
(2) a magnesium halide, and
(3) an organometallic compound.

2. A process for preparing a polyolefin as set forth in Claim 1, wherein said solid material (a) is obtained by contacting the components (1) and (2) with each other at a proportion of 0.01 – 5 g of the component (2) per gram of the component (1), in a solvent which dissolves the component (2), at a temperature in the range of −100°C to 400°C, for a period of time in the range of 5 minutes to 50 hours, then removing the solvent, and subsequently contacting the resulting product with the component (3) at a temperature in the range of 20°C to 400°C for 5 minutes to 20 hours in the presence or absence of a solvent.

3. A process for preparing a polyolefin as set forth in Claim 2, wherein the component (3) is used in an amount of 0.001 to 10 mols per gram of the product of contacting the components (1) and (2).

4. A process as claimed in any one of Claims 1 to 3, wherein said catalyst further contains an electron donor.

5. A process as claimed in any one of Claims 1 to 4, wherein said organometallic compound is selected from organoaluminium compounds, organozinc compounds and mixtures thereof.

6. A process as claimed in any one of Claims 1 to 5, wherein the polymerization reaction is conducted in vapor phase.

7. A process as claimed in any one of Claims 1 to 6, wherein said polyolefin is polypropylene.

## Patentansprüche

1. Verfahren zur Herstellung eines Polyolefins durch Homopolymerisation oder Copolymerisation eines Olefins oder von Olefinen unter Verwendung eines Katalysators, der eine feste Katalysator-Komponente und eine metallorganische Verbindung umfaßt, wobei die feste Katalysator-Komponente erhalten wird durch In-Kontakt-Bringen wenigstens einer Titanverbindung und/oder einer Vanadiumverbindung mit einem festen Material (a), wobei das feste Material (a) erhalten wird durch In-Kontakt-Bringen des Reaktionsprodukts der Komponenten (1) und (2) mit Komponente (3), worin die Komponenten (1), (2) und (3) die folgenden sind:
(1) ein Siliciumoxid und/oder ein Aluminiumoxid;
(2) ein Magnesiumhalogenid; und
(3) eine metallorganische Verbindung.

2. Verfahren zur Herstellung eines Polyolefins nach Anspruch 1, worin das feste Material (a) erhalten wird durch In-Kontakt-Bringen der Komponenten (1) und (2) miteinander in einem Mengenverhältnis von 0,01 bis 5 g der Komponente (2) pro Gramm der Komponente (1) in einem Lösungsmittel, das die Komponente (2) löst, bei einer Temperatur im Bereich von −100°C bis 400°C für einen Zeitraum im Bereich von 5 Minuten bis 50 Stunden, anschließendes Entfernen des Lösungsmittels und nachfolgendes In-Kontakt-Bringen des resultierenden Produktes mit der Komponente (3) bei einer Temperatur im Bereich von 20°C bis 400°C für eine Zeit von 5 Minuten bis 20 Stunden in Gegenwart oder Abwesenheit eines Lösungsmittels.

3. Verfahren zur Herstellung eines Polyolefins nach Anspruch 2, worin die Komponente (3) in einer Menge von 0,001 bis 10 Mol pro Gramm des Produkts verwendet wird, das beim In-Kontakt-Bringen der Komponenten (1) und (2) erhalten wird.

4. Verfahren nach irgendeinem der Ansprüche 1 bis 3, worin der Katalysator außerdem einen Elektronendonor enthält.

5. Verfahren nach irgendeinem der Ansprüche 1 bis 4, worin die metallorganische Verbindung gewählt ist unter aluminiumorganischen Verbindungen, zinkorganischen Verbindungen und Mischungen daraus.

6. Verfahren nach irgendeinem der Ansprüche 1 bis 5, worin die Polymerisationsreaction in der Dampfphase durchgeführt wird.

7. Verfahren nach irgendeinem der Ansprüche 1 bis 6, worin das Polyolefin Polypropylen ist.

**Revendications**

1. Procédé pour préparer une polyoléfine par homopolymérisation ou copolymérisation d'une oléfine ou d'oléfines au moyen d'un catalyseur comprenant un composant catalytique solide et un composé organométallique, ce composant catalytique solide étant obtenu par mise en contact d'au moins un composé du titane et/ou d'un composé du vanadium avec un matériau solide (a), ce matériau solide (a) étant obtenu par mise en contact du produit de réaction des composants (1) et (2) avec un composant (3), dans lequel les composants (1), (2) et (3) sont :
   (1) un oxyde de silicium et/ou oxyde d'aluminium,
   (2) un halogénure de magnésium, et
   (3) un composé organométallique.

2. Procédé pour préparer une polyoléfine suivant la revendicaton 1, dans lequel ce matériau solide (a) est obtenu par mise en contact des composants (1) et (2) l'un avec l'autre à raison de 0,01 à 5 g du composant (2) par gramme du composant (1), dans un solvant qui dissout le composant (2), à une température de l'ordre de − 100 ° C à 400 ° C pendant une période de temps de l'ordre de 5 minutes a 50 heures, puis élimination du solvant et ensuite mise en contact du produit résultant avec le composant (3) à une température de l'ordre de 20 ° C à 400 ° C pendant une période de temps de l'ordre de 5 minutes à 20 heures en présence ou non d'un solvant.

3. Procédé pour préparer une polyoléfine suivant la revendication 2, dans lequel le composant (3) est utilisé en une quantité de 0,001 à 10 moles par gramme du produit résultant de la mise en contact des composants (1) et (2).

4. Procédé suivant l'une quelconque des revendications 1 à 3, dans lequel ce catalyseur contient de plus un composé électrodonneur.

5. Procédé suivant l'une quelconque des revendications 1 à 4, dans lequel ce composé organométallique est choisi parmi les composés organoaluminiques, les composés organozinciques et leurs mélanges.

6. Procédé suivant l'une quelconque des revendications 1 à 5, dans lequel la réaction de polymérisation est conduite en phase vapeur.

7. Procédé suivant l'une quelconque des revendications 1 à 6, dans lequel cette polyoléfine est un polypropylène.